(19) Europäisches Patentamt
European Patent Office
Office européen des brevets

(11) EP 3 903 098 B1

(12) FASCICULE DE BREVET EUROPEEN

(45) Date de publication et mention
de la délivrance du brevet:
**25.10.2023 Bulletin 2023/43**

(21) Numéro de dépôt: **19849033.6**

(22) Date de dépôt: **23.12.2019**

(51) Classification Internationale des Brevets (IPC):
*G01N 21/956* (2006.01)   *G01J 9/00* (2006.01)
*G01N 21/41* (2006.01)   *G02B 21/36* (2006.01)
*G02B 21/08* (2006.01)

(52) Classification Coopérative des Brevets (CPC):
**G01N 21/41; G01N 21/956; G02B 21/082;
G02B 21/086; G02B 21/14; G02B 21/367;**
G01N 2021/8864

(86) Numéro de dépôt international:
**PCT/FR2019/053284**

(87) Numéro de publication internationale:
**WO 2020/136346 (02.07.2020 Gazette 2020/27)**

(54) **PROCÉDÉ DE CARACTÉRISATION D'UN ÉCHANTILLON PAR IMAGERIE DE PHASE**

VERFAHREN ZUR CHARAKTERISIERUNG EINER PROBE DURCH PHASENBILDGEBUNG

METHOD FOR CHARACTERISING A SAMPLE BY PHASE IMAGING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.12.2018 FR 1874187**

(43) Date de publication de la demande:
**03.11.2021 Bulletin 2021/44**

(73) Titulaires:
• **Commissariat à l'énergie atomique
et aux énergies alternatives
75015 Paris (FR)**
• **Horiba ABX SAS
34184 Montpellier Cedex 4 (FR)**

(72) Inventeur: **LE CARDINAL DE KERNIER, Isaure
38054 GRENOBLE Cedex 09 (FR)**

(74) Mandataire: **INNOV-GROUP
310, avenue Berthelot
69372 Lyon Cedex 08 (FR)**

(56) Documents cités:
**US-A1- 2005 062 957   US-A1- 2015 100 278**

EP 3 903 098 B1

**Description**

## DOMAINE TECHNIQUE

Le domaine de l'invention est le domaine de l'imagerie de phase pour la caractérisation d'un échantillon. L'invention convient notamment à la caractérisation de l'état de surface d'un échantillon. Il peut également s'agir de la caractérisation d'éléments ou de particules disposés dans un milieu.

## ART ANTERIEUR

L'imagerie de phase est une technique couramment utilisée, en particulier pour caractériser des échantillons transparents ou translucides. Dans ce type d'échantillon, en effet, le recours à des moyens d'imagerie classiques, par exemple le microscope en transmission, ne permet pas d'obtenir une observation satisfaisante, du fait de la transparence de l'échantillon. L'imagerie de phase permet ainsi d'obtenir une image de la phase d'une onde lumineuse complexe transmise par un échantillon. L'image de phase permet d'estimer des informations sur des échantillons transparents. Elle permet d'obtenir une image révélant un contraste caractéristique du déphasage de l'onde lumineuse, induit par l'échantillon. Il s'agit par exemple d'informations de nature morphologique (taille, surface) ou de nature optique (indice de réfraction).

Des méthodes ont été mises en oeuvre, basées sur l'obtention d'une figure d'interférence entre un faisceau de référence, émis par une source de lumière généralement cohérente, et un faisceau émis par la même source de lumière et s'étant propagé à travers l'échantillon. Il s'agit de méthodes d'interférométrie, permettant d'obtenir une information de phase quantitative précise, mais au prix d'une instrumentation complexe. De plus, ce type de méthode présente un champ d'observation faible, ce qui suppose un balayage de l'échantillon. Le balayage augmente considérablement la durée de caractérisation. Des exemples d'application de telles méthodes sont donnés dans US20050062957 ou dans US20150100278.

L'inventrice a conçu un dispositif simple, permettant une caractérisation d'un échantillon de surface importante, typiquement supérieure à 5 ou 10 mm$^2$, sans nécessiter de balayage. L'invention permet également une caractérisation précise d'échantillons faiblement déphasants, c'est-à-dire présentant un gradient de phase faible par rapport au milieu extérieur dans lequel ils sont plongés. L'invention permet de quantifier le déphasage, pourtant faible, induit par ce type d'échantillon.

## EXPOSE DE L'INVENTION

Un premier objet de l'invention est un procédé de caractérisation d'un échantillon, s'étendant selon un plan d'échantillon, le procédé comportant les étapes suivantes:

a) illumination de l'échantillon à l'aide d'une source de lumière, de telle sorte que sous l'effet de l'illumination, un capteur d'image est exposé à une onde lumineuse d'exposition transmise ou réfléchie par l'échantillon, se propageant parallèlement à un axe de propagation, le capteur d'image définissant un plan de détection;

b) obtention de plusieurs images de l'échantillon à l'aide du capteur d'image, le capteur d'image étant associé à un système optique s'étendant entre le capteur d'image et l'échantillon, le système optique définissant un plan image et un plan objet, de telle sorte que lors de l'acquisition de plusieurs images :

- le plan objet est décalé par rapport au plan d'échantillon, selon une distance de défocalisation objet, et/ou le plan image est décalé par rapport à un plan de détection, d'une distance de défocalisation image;
- les distances de défocalisation objet ou les distances de défocalisation image respectivement associées à deux images différentes étant distinctes ;

c) à partir de chaque image, calcul, en différentes coordonnées radiales, selon le plan de détection, d'une variation axiale de l'intensité de l'onde lumineuse d'exposition selon l'axe de propagation;

d) à partir de la variation calculée lors de l'étape c), obtention d'une image de phase de l'onde lumineuse d'exposition, l'image de phase représentant une cartographie d'un déphasage, induit par l'échantillon, de l'onde lumineuse d'exposition dans le plan de détection ;

e) caractérisation de l'échantillon à partir de l'image de phase obtenue;

le procédé étant caractérisé en ce que l'étape d) comporte une prise en compte d'un bruit affectant chaque image acquise lors de l'étape b).

Lors de l'étape b), le nombre d'images acquises peut notamment être compris entre 2 et 10. Par cartographie d'un déphasage, il est entendu une cartographie d'une différence entre la phase de l'onde lumineuse d'exposition, détectée par le capteur d'image, et la phase d'une onde lumineuse d'exposition parvenant au capteur d'image en l'absence d'échantillon.

Les distances de focalisation sont à considérer parallèlement à l'axe de propagation.

Par bruit de l'image, il est entendu le bruit formé par les composants du dispositif d'observation, résultant en l'apparition de fluctuations statistiques sur chaque image acquise par le capteur d'image lors de l'étape b). La prise en compte du bruit permet de quantifier des faibles valeurs de déphasage.

Le procédé comporte une acquisition d'une image de calibration par le capteur d'image, le capteur d'image étant illuminé sans échantillon disposé entre ce dernier et la source de lumière, le bruit affectant chaque image acquise étant défini, en différentes coordonnées radiales du plan de détection, à partir de l'image de calibration.

L'étape d) comporte, en chaque coordonnée radiale, les sous-étapes suivantes :

di) détermination d'une fonction auxiliaire à partir de la variation axiale de l'intensité de l'onde lumineuse d'exposition ;
dii) détermination de la phase, à partir d'un gradient de la fonction auxiliaire en ladite coordonnée radiale.

La sous-étape di) peut comporter une résolution d'une équation de type

$$\Delta_\perp u + \mathrm{v} = f,$$

où :

- $\Delta_\perp$ est l'opérateur laplacien dans un plan perpendiculaire à l'axe de propagation Z;
- $u$ est la fonction auxiliaire à estimer ;
- $f$ est une fonction correspondant à la variation axiale de l'intensité de l'onde lumineuse d'exposition multipliée par le nombre d'onde de cette dernière ;
- v est un terme de bruit ;

La sous-étape dii) peut comporter une résolution d'une équation de type

$$\Delta_\perp u + \mathrm{v} = f$$

où :

- $\Delta_\perp$ est l'opérateur laplacien dans un plan perpendiculaire à l'axe de propagation Z;
- $u$ est la phase à estimer ;
- $f$ est une fonction correspondant un gradient de la fonction auxiliaire, déterminée lors de la sous-étape di), divisée par une intensité d'une image acquise lors de l'étape b) ;
- v est un terme de bruit.

Selon un mode de réalisation, lors de la sous-étape di), on détermine une expression fréquentielle de la fonction auxiliaire à partir d'un ratio $\dfrac{F}{(2i\pi)^2\left(\nu_x{}^2+\nu_y{}^2\right)+\dfrac{1}{(2i\pi)^2\left(\nu_x{}^2+\nu_y{}^2\right)S}\dfrac{N}{S}}$ où :

- $F$ est une expression fréquentielle de la fonction de la variation axiale de l'intensité de l'onde lumineuse d'exposition multipliée par le nombre d'onde;
- $\dfrac{N}{S}$ est une estimation du rapport signal à bruit affectant ladite expression fréquentielle;
- $\nu_x$ et $\nu_y$ sont les fréquences spatiales selon deux axes X et Y du plan de détection ;

Selon un mode de réalisation, lors de la sous-étape dii), on détermine une expression fréquentielle de la phase, à partir d'un ratio $\dfrac{F}{(2i\pi)^2\left(\nu_x{}^2+\nu_y{}^2\right)+\dfrac{1}{(2i\pi)^2\left(\nu_x{}^2+\nu_y{}^2\right)S}\dfrac{N}{S}}$ où :

- $F$ est une expression fréquentielle du gradient de la fonction auxiliaire, déterminée lors de la sous-étape di), divisée par une intensité d'une image acquise lors de l'étape b) ;

- $\dfrac{N}{S}$ est une estimation du rapport signal à bruit de ladite expression fréquentielle ;
- $v_x$ et $v_y$ sont les fréquences spatiales selon deux axes X et Y du plan de détection.

La sous-étape di) comporte une estimation d'une densité spectrale de bruit, à partir d'une acquisition d'une image de calibration, par le capteur d'image, le capteur d'image étant illuminé sans échantillon disposé entre ce dernier et la source de lumière ;

La sous-étape di) comporte une prise en compte d'une densité spectrale de puissance de la fonction auxiliaire ;
La sous-étape dii) comporte une estimation d'une densité spectrale de bruit à partir de l'image de la fonction auxiliaire résultant de la sous-étape di);
La sous-étape dii) comporte une prise en compte d'une densité spectrale de puissance de la phase.

Lors des sous-étapes di) et dii), les densités spectrales de puissance respectivement prises en compte peuvent être déterminées en utilisant un échantillon de calibration, induisant un déphasage connu. Le procédé comporte alors un ajustement progressif des valeurs de chaque densité de puissance, de façon à obtenir respectivement une image de la fonction auxiliaire et une image de la phase correspondant à une image de la fonction auxiliaire et à une image de phase obtenues avec l'échantillon de calibration.

Le procédé peut comporter l'une quelconque des caractéristiques suivantes, prises isolément ou selon les combinaisons techniquement réalisables :

- lors de l'étape a) la surface de l'échantillon illuminée est supérieure à 10 mm$^2$ ;
- lors de l'étape b), chaque image acquise représente une surface d'échantillon supérieure à 10 mm$^2$ ;
- l'étape b) comporte une acquisition d'une image de l'échantillon selon une configuration focalisée, de telle sorte que le plan image du système optique correspond au plan de détection et que le plan objet du système optique correspond à un plan selon lequel s'étend l'échantillon ;
- l'échantillon est disposé entre la source de lumière et le capteur d'image, de telle sorte que l'onde lumineuse d'exposition est une onde lumineuse ayant traversé l'échantillon, de la source de lumière vers le capteur d'image ;
- l'échantillon est réfléchissant ou est disposé sur un support réfléchissant, de telle sorte que l'onde lumineuse d'exposition, est une onde lumineuse réfléchie par l'échantillon ou par le support réfléchissant;
- l'échantillon présente une surface structurée, et dans lequel la caractérisation de l'échantillon est une caractérisation de la structuration de la surface de l'échantillon;
- l'échantillon comporte des particules, la caractérisation de l'échantillon étant une caractérisation des particules de l'échantillon.

Un deuxième objet de l'invention est un dispositif de caractérisation d'un échantillon selon la revendication 11
Le dispositif peut comporter:

- une première source de lumière, configurée pour illuminer l'échantillon, lorsqu'il est maintenu sur le support, de telle sorte que l'échantillon est disposé entre la source de lumière et le capteur d'image;
- une deuxième source de lumière, configurée pour illuminer l'échantillon, lorsqu'il est maintenu sur le support, de telle sorte que l'échantillon ou le support d'échantillon réfléchit la lumière vers le capteur d'image.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A représente un exemple de dispositif selon l'invention, fonctionnant selon une configuration en transmission.
La figure 1B représente un exemple de dispositif selon l'invention, fonctionnant selon une configuration en réflexion.
La figure 1C est un exemple d'échantillon convenant à une observation selon la configuration en transmission.
La figure 1D est un exemple d'échantillon convenant à une observation selon la configuration en réflexion.

La figure 1E est un autre exemple d'échantillon convenant à une observation selon la configuration en réflexion.

La figure 2A montre les principales étapes d'un procédé pour obtenir une image de phase.

La figure 2B illustre une acquisition d'images défocalisées.

La figure 3A montre un premier échantillon de test, disposé pour être caractérisé selon une configuration en transmission.

La figure 3B montre un résultat d'une caractérisation de la topographie d'une surface de l'échantillon représenté sur la figure 3A.

La figure 4A montre le premier échantillon de test, disposé pour être caractérisé selon une configuration en réflexion.

La figure 4B montre les résultats respectifs d'une caractérisation de la topographie d'une surface de l'échantillon de test représenté sur la figure 4A, selon la configuration de transmission et selon la configuration de réflexion. La partie du premier échantillon de test caractérisée sur la figure 4B est différente de celle caractérisée sur la figure 3B.

La figure 5A est une image représentative d'un bruit de fond généré par un capteur d'image.

La figure 5B montre une image de phase reconstruite selon un premier enchainement d'étapes.

La figure 5C montre une image de phase reconstruite selon une variante préférée.

La figure 6A montre un deuxième échantillon modélisé.

La figure 6B montre une image de phase du deuxième échantillon reconstruite selon un premier enchainement d'étapes.

La figure 6C montre une image de phase du deuxième échantillon reconstruite selon une variante préférée.

La figure 7A est une mire de phase.

La figure 7B montre des profils d'images de phase de la mire respectivement obtenues en mettant en oeuvre un dispositif commercial de référence, reconnu comme quantitatif, ainsi qu'en mettant en oeuvre un procédé selon l'invention.

## EXPOSE DE MODES DE REALISATION PARTICULIERS

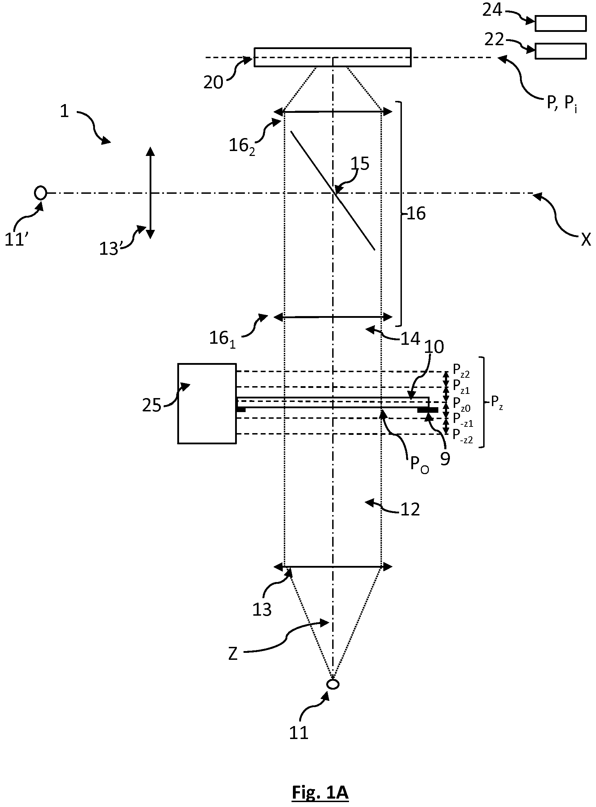

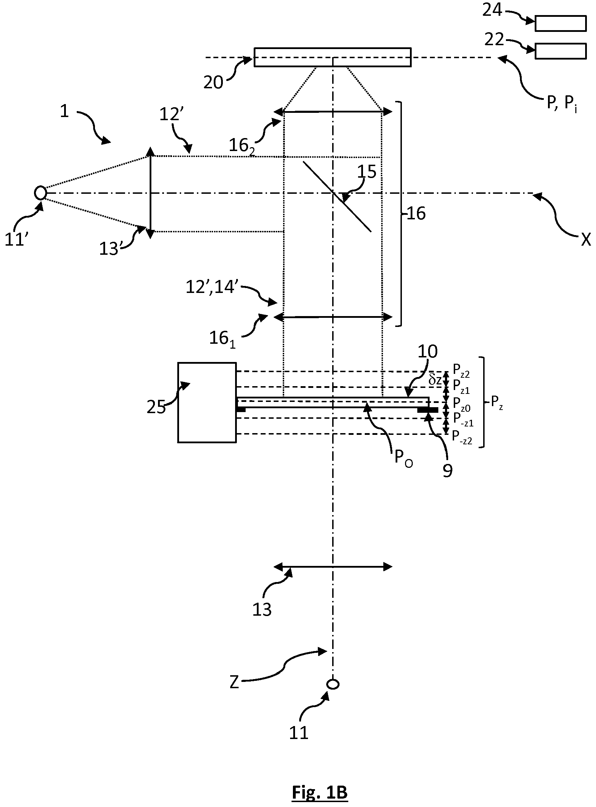

Les figures 1A et 1B représentent un dispositif 1 permettant une mise en oeuvre de l'invention. La figure 1A correspond à une configuration dite en transmission, tandis que la figure 1B correspond à une configuration en réflexion.

Le dispositif 1 comporte une première source de lumière 11 ainsi qu'une deuxième source de lumière 11'. Selon la configuration en transmission, la première source de lumière 11 émet une onde lumineuse incidente 12, laquelle est mise en forme par une lentille de mise en forme 13, de façon à atteindre un échantillon 10 sous la forme d'ondes planes. La première source de lumière, couplée à la lentille de mise en forme, permet d'illuminer une surface importante de l'échantillon, typiquement supérieure à 5 mm$^2$ ou 10 mm$^2$. L'échantillon 10 est transparent ou translucide. Sous l'effet de l'illumination par l'onde lumineuse incidente 12, une onde lumineuse 14, dite onde lumineuse d'exposition, se propage en aval de l'échantillon, jusqu'à un capteur d'image 20. L'onde lumineuse d'exposition 14 se propage parallèlement à un axe de propagation Z. L'onde lumineuse d'exposition 14 est focalisée par un système optique 16. Le système optique définit un axe optique parallèle à l'axe de propagation Z. Dans l'exemple représenté, le système optique 16 comporte un objectif $16_1$ optiquement couplé à une lentille de tube $16_2$. Une telle configuration permet de disposer des composants optiques entre l'objectif $16_1$ et la lentille de tube $16_2$ sans que ces derniers n'entraînent des aberrations. Le dispositif comporte une lame semi-réfléchissante 15, disposée entre l'objectif $16_1$ et la lentille de tube $16_2$. Dans la configuration en transmission, la lame semi-réfléchissante 15 transmet l'onde d'exposition 14 vers le capteur d'image 20. Selon la configuration en transmission, l'onde lumineuse incidente 12 et l'onde lumineuse d'exposition 14 se propagent, respectivement en amont et en aval de l'échantillon, parallèlement à l'axe de propagation Z, et dans un même sens.

La première source de lumière 11 peut être une diode électroluminescente, une source blanche ou éventuellement une source laser, sachant qu'une source laser est susceptible d'entraîner la formation de speckle, ce qui n'est pas souhaité. Il peut s'agir d'une source de lumière formant un éclairage de Kölhler. Il est préférable que l'onde lumineuse incidente 12 atteigne l'échantillon 10 en formant des ondes planes ou considérées comme telles. Il est préférable que la première source de lumière et/ou la deuxième source de lumière émette une onde lumineuse incidente dans une bande spectrale étroite, par exemple inférieure à 100 nm, et de préférence inférieure à 50 nm voire 10 nm. Plus la bande spectrale est étroite, meilleure est la précision de la quantification.

Dans la configuration en transmission, l'échantillon est transparent ou translucide, de façon à permettre une transmission d'une partie de l'onde incidente 12 pour former l'onde lumineuse d'exposition 14. Il est maintenu par un support 9 permettant une propagation de l'onde lumineuse incidente 12 à travers l'échantillon.

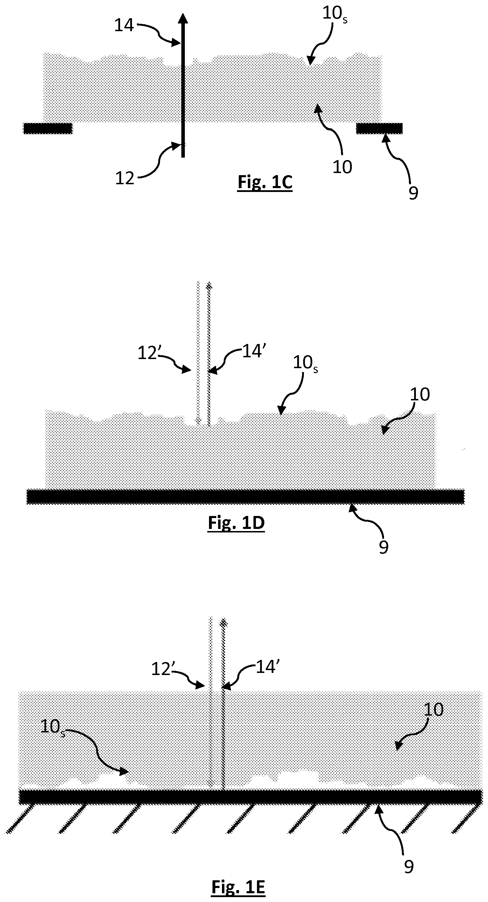

L'invention peut adresser différents types d'échantillons. L'échantillon peut être solide ou visqueux. Il peut par exemple s'agir d'un composant en verre ou réalisé selon un matériau minéral ou organique convenant à la fabrication de composants optiques. Il peut s'agir d'un composant microfluidique, présentant des canaux ménagés sur un support en matériau organique ou minéral transparent ou translucide. Les canaux sont destinés à être remplis par un liquide durant l'utilisation du composant microfluidique. Il peut également s'agir d'un élément comportant des canaux ou des cavités, et destiné à être disposé sur un dispositif électromécanique de type MEMS ou NEMS, (Micro ElectroMechanical System - Nano ElectroMechanical System). Lorsque l'échantillon est solide ou visqueux, la caractérisation de l'échantillon peut être un contrôle de son état de surface, ou un contrôle de la topographie d'une de ses surfaces. Plus précisément, l'échantillon 10 peut comporter une surface $10_s$ structurée, comme représenté sur les figures 1C, 1D et 1E. Par surface structurée, on entend une surface présentant une structuration, que l'on souhaite contrôler. La structuration peut résulter d'opérations de microfabrication, par exemple des étapes de gravures réalisées au niveau de la surface $10_s$. L'invention s'applique principalement à des surfaces d'échantillon $10_s$ structurées selon une profondeur micrométrique ou millimétrique. Selon la configuration en transmission, l'échantillon 10 peut s'étendre comme cela a été représenté sur la figure 1C. Sur la figure 1C, la flèche illustre le sens de propagation de la lumière. L'onde lumineuse incidente 12 traverse l'échantillon et forme ainsi l'onde lumineuse d'exposition 14.

Mais l'invention ne se limite pas au contrôle de l'état de surface d'échantillons solides. Elle peut être appliquée sur des échantillons comportant des éléments ou des particules, en particulier transparents ou translucides. L'invention permet d'obtenir une représentation exploitables desdits éléments ou particules, de façon à permettre leur caractérisation. Le terme caractérisation correspond à :

- une obtention d'une image permettant d'observer les éléments ou particules, ce qui permet de les visualiser ;
- une détermination d'une taille ou d'une forme des éléments ou particules ;
- une détermination d'un paramètre optique des éléments ou particules, en particulier l'indice de réfraction ou l'épaisseur optique, cette dernière correspondant un produit de l'épaisseur par l'indice de réfraction ;
- une identification des éléments ou particules ;
- une classification des éléments ou particules selon des classes prédéterminées.

Le terme particule désigne par exemple des particules biologiques, par exemple des cellules ou microorganismes. Il peut également désigner des gouttelettes d'une émulsion, ou des microbilles utilisées dans certains protocoles biologiques. Il peut également désigner des bulles d'air ou d'un autre gaz baignant dans un milieu liquide ou solide. Généralement, la dimension des particules est micrométrique ou millimétrique. Cela signifie que les particules sont inscrites dans un disque ou une sphère dont le rayon est inférieur ou égal à quelques microns, typiquement 10 $\mu$m ou 100 $\mu$m ou quelques millimètres, par exemple 1 ou 2 mm.

L'échantillon 10 peut être déplacé, et en particulier translaté selon l'axe Z. Dans l'exemple représenté sur les figures 1A et 1B, une platine 25 permet le déplacement de l'échantillon selon l'axe Z. De façon complémentaire ou alternative, le capteur d'image 20 peut être translaté selon l'axe Z.

Le capteur d'image 20 peut être un capteur pixelisé de type CCD ou CMOS. Les pixels définissent un plan de détection P. Le plan de détection P est de préférence orthogonal à l'axe de propagation Z. De préférence, l'échantillon 10 s'étend parallèlement au plan de détection. Ainsi, l'échantillon définit un plan d'échantillon, selon lequel s'étend l'échantillon. Le plan de l'échantillon est de préférence parallèle au plan de détection.

La figure 1B correspond à la configuration en réflexion. Selon cette configuration, la deuxième source de lumière 11' émet une onde lumineuse incidente 12', laquelle est mise en forme par une lentille de mise en forme 13', de façon à atteindre un échantillon 10 sous la forme d'ondes planes. L'onde lumineuse incidente 12' est émise par la deuxième source de lumière 11' et se propage tout d'abord selon un axe de propagation X, orthogonal de l'axe de propagation Z précédemment décrit. La lame semi-réfléchissante 15 est agencée pour réfléchir l'onde lumineuse incidente 12' de telle sorte que cette dernière se propage parallèlement à l'axe Z en aval de la lame semi-réfléchissante, jusqu'à l'échantillon 10. Le terme aval se comprend en considérant le sens de la propagation de la lumière. Au niveau de l'échantillon 10, l'onde lumineuse incidente 12' est réfléchie pour former une onde lumineuse d'exposition 14', se propageant parallèlement à l'axe de propagation Z mais selon un sens opposé à l'onde lumineuse incidente 12'. L'onde lumineuse d'exposition 14' se propage alors jusqu'au capteur d'image 20, en étant focalisée par le système optique 16. Selon ce mode de réalisation, l'onde lumineuse incidente 12' est réfléchie au niveau de l'échantillon 10. Par "au niveau de l'échantillon", on entend que la réflexion est produite soit sous l'effet de l'échantillon, ce dernier étant réfléchissant (cf. figure 1D), soit sous l'effet d'un support 9 réfléchissant maintenant l'échantillon (cf. figure 1E).

Lorsque l'échantillon est réfléchissant, il peut s'agir d'un substrat réfléchissant, par exemple un substrat métallique ou semi-conducteur. L'échantillon peut également être transparent ou translucide, et déposé sur un support d'échantillon 9 réfléchissant, comme représenté sur la figure 1E. Dans ce cas, l'échantillon peut être du même type que ceux cités en lien avec la configuration en transmission. L'onde lumineuse incidente 12' se propage à travers l'échantillon avant d'être réfléchie par le support d'échantillon 9. Sur la figure 1E, le support d'échantillon est un miroir.

La deuxième source de lumière 11' peut présenter des caractéristiques similaires à la première source de lumière 11. Il peut s'agir une diode électroluminescente, une source blanche ou une source laser, en prenant en compte les réserves précédemment exprimées quant à la formation de speckle. Il peut s'agir d'une source de lumière formant un éclairage de Kölhler. Il est préférable que l'onde lumineuse incidente 12' atteigne l'échantillon 10 en formant des ondes planes ou considérées comme telles.

La première source de lumière 11 peut être distincte de la deuxième source de lumière 11'. De façon alternative, la première source de lumière est confondue avec la deuxième source de lumière. Un mécanisme de déplacement assure alors une commutation de la source de lumière, entre les positions respectivement décrites sur les figures 1A et 1B.

Selon un mode de réalisation, l'échantillon comporte une source lumineuse, disposée face à des extrémités proximales de deux fibres optiques, chaque fibre optique s'étendant entre une extrémité proximale et une extrémité distale. La première source de lumière et la deuxième source de lumière sont formées par les extrémités distales respectives de chaque fibre optique.

Ainsi, le dispositif 1 permet d'examiner un échantillon :

- soit transparent, selon la configuration en transmission (figure 1A) et la disposition représentée sur la figure 1C;
- soit réfléchissant, selon la configuration en réflexion (figure 1B) et selon la disposition représentée sur la figure 1D ou la disposition représentée sur la figure 1E.

Lorsqu'une onde lumineuse se propage à travers l'échantillon, ou est réfléchie par ce dernier, et que l'échantillon présente une surface $10_s$ structurée, le trajet optique suivi par l'onde lumineuse est affecté par la structuration de la surface l'échantillon. En effet, l'onde lumineuse subit une différence de trajets optiques en fonction de la position parallèlement au plan de détection P. Un objectif de l'invention est alors de caractériser la topographie de la surface $10_s$ de l'échantillon.

Selon la configuration en transmission, si n désigne l'indice de réfraction de l'échantillon, et *k* désigne le nombre d'onde de l'onde lumineuse incidente 12, l'onde lumineuse d'exposition 14, résultant de la propagation de l'onde lumineuse incidente 12 à travers l'échantillon, subit un déphasage $\varphi(r)$ tel que :

$$\varphi(r) = k \times d(r) \ (1)$$

où

- r désigne une coordonnée dans un plan parallèle au plan de détection P ;
- $d(r)$ correspond au trajet optique dans l'échantillon.

Comme décrit auparavant le déphasage $\varphi(r)$ correspond, à la coordonnée *r,* à une différence entre :

- la phase de l'onde lumineuse d'exposition 14 (ou 14') détectée par le capteur d'image 20 après avoir été réfléchie par l'échantillon 10 ou après s'être propagée à travers l'échantillon 10;
- la phase d'une onde lumineuse d'exposition qui serait détectée par le capteur d'image sans échantillon disposé entre la source de lumière et le capteur d'image 20.

Selon la configuration en transmission, le trajet optique correspond à l'épaisseur $e(r)$ d'échantillon traversée à la coordonnée r, multipliée par le saut d'indice de réfraction entre le milieu ambiant, dans lequel est disposé l'échantillon, et l'échantillon. Ainsi,

$$d(r) = e(r)\Delta n \ \ (1')$$

Où $\Delta n$ correspond à la variation d'indice de réfraction entre l'échantillon et le milieu ambiant. Si le milieu ambiant est de l'air : $\Delta n = n\text{-}1$, *n* étant l'indice de réfraction de l'échantillon.

Selon la configuration en réflexion, le trajet optique est égal à 2 fois l'épaisseur d'échantillon traversée. Aussi, selon en réflexion :

$$d(r) = 2e(r)\Delta n \ \ (1'')$$

Ainsi, le déphasage de l'onde d'exposition 14, détectée par le capteur d'image 20, est directement proportionnel à l'épaisseur de l'échantillon. Lorsque la surface $10_s$ de l'échantillon présente une structuration, cela se traduit par une variation locale de l'épaisseur de l'échantillon. Par conséquent, la détermination d'une image de phase $I_\varphi$, représentant une cartographie de la valeur du déphasage en différentes coordonnées r, permet d'obtenir une cartographie de l'épaisseur de l'échantillon, moyennant la connaissance de l'indice de réfraction, et donc de caractériser la morphologie de la surface $10_s$ de l'échantillon. L'image de phase $I_\varphi$ permet ainsi de caractériser une topographie de la surface de l'échantillon.

**EP 3 903 098 B1**

Le capteur d'image 20 est relié à une unité de traitement 22, par exemple un microprocesseur, couplée à une mémoire 24 comportant des instructions pour une mise en oeuvre d'opérations de calcul décrites par la suite.

On cherche notamment, à partir de plusieurs images acquises par le capteur d'image, à estimer une image de phase $I_\varphi$ représentant le déphasage $\varphi(r)$ de l'onde lumineuse d'exposition en différentes coordonnées r selon le plan de détection P. A partir de chaque valeur du déphasage $\varphi(r)$, on peut estimer un trajet optique $d(r)$ dans l'échantillon selon l'expression :

$$\varphi(r) = k \times d(r) \,(2)$$

L'obtention de $d(r)$ permet de remonter à la topographie de la surface de l'échantillon observé.

Le système optique 16 définit un plan objet $P_o$ et un plan image $P_i$. Le plan objet $P_o$ et le plan image $P_i$ sont conjugués par le système optique 16. Lorsque l'échantillon s'étend selon le plan objet $P_o$ et que le plan de détection P correspond au plan image $P_i$, le capteur d'image 20 permet de former une image nette $I_o$ de l'échantillon.

Il est possible d'obtenir une image de la phase de l'onde lumineuse d'exposition 14 en acquérant différentes images défocalisées $I_z$ de l'échantillon, chaque image défocalisée étant acquise en décalant le plan de l'échantillon par rapport au plan objet $P_o$ selon une distance de défocalisation objet et/ou en décalant le plan de détection P par rapport plan image $P_i$ selon une distance de défocalisation image.

Sur les figures 1A et 1B, on a représenté en pointillés différents plans $P_{Z1}$, $P_{Z2}$, $P_{-Z1}$, $P_{-Z2}$ dans lesquels l'échantillon est déplacé de façon à permettre l'acquisition d'images défocalisées. Les plans $P_{Z1}$, $P_{Z2}$, $P_{-Z1}$, $P_{-Z2}$ sont respectivement décalés du plan objet $P_o$ selon des distances de défocalisations objet $z_1$, $z_2$, $-z_1$, $-z_2$. Chaque distance de défocalisation est de préférence comprise entre 20 μm et 1 mm. Le décalage des plans de défocalisation peut être effectué selon des incréments réguliers de $\delta z = 50$ μm par exemple. L'incrément $\delta z$ correspond à l'écart entre deux distances de défocalisation successives.

Dans les exemples représentés sur les figures 1A et 1B, la défocalisation est effectuée en déplaçant l'échantillon par rapport au plan objet du système optique 16, tandis que le plan de détection du capteur d'image s'étend selon le plan image $P_i$. De façon complémentaire ou alternative, le capteur d'image 20 peut être déplacé de telle sorte que le plan de détection P est décalé par rapport au plan image $P_i$.

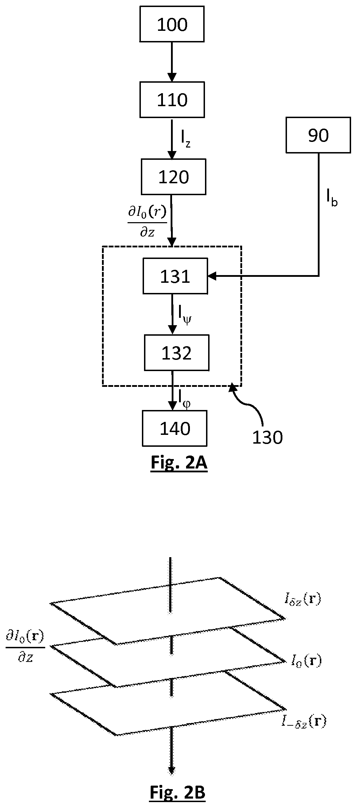

La figure 2A représente les principales étapes d'un procédé permettant d'obtenir une image $I_\varphi$ de phase de l'onde lumineuse d'exposition 14. L'image de phase correspond à une distribution spatiale du déphasage induit par l'échantillon, au niveau du plan de détection. Autrement dit, $I_\varphi(r) = \varphi(r)$.

A titre d'exemple, on se base selon la configuration de transmission, sachant que le procédé peut être mis en oeuvre selon la configuration de réflexion.

Etape 100 : illumination de l'échantillon à l'aide de la première source de lumière (cf. figure 1A) (ou à l'aide de la deuxième source de lumière selon la configuration en réflexion).

Etape 110 : acquisition d'images $I_z$ de l'échantillon, l'échantillon étant translaté selon l'axe optique Z entre l'acquisition de deux images successives. Au moins deux images $I_z$ sont acquises selon une configuration défocalisée, respectivement selon deux distances de défocalisation différentes. Il est préférable d'acquérir des images en disposant l'échantillon de part et d'autre du plan objet $P_o$ du système optique comme représenté sur la figure 2B, mais cela n'est pas nécessaire. Il est par exemple conseillé d'acquérir trois images $I_0$, $I_z$ et $I_{-z}$ en disposant l'échantillon 10 respectivement dans le plan objet $P_O$, ainsi qu'à une distance +Z et -Z de ce dernier. L'image $I_0$, acquise lorsque le plan selon lequel s'étend l'échantillon correspond au plan objet $P_O$, est une image nette de l'échantillon. Selon cette configuration, le plan de l'échantillon est conjugué du plan de détection.

De façon alternative, l'échantillon 10 est maintenu dans le plan objet $P_O$ et le capteur d'image 20 est déplacé par rapport au plan image $P_I$, de préférence de part et d'autre de ce dernier.

Un objectif de cette étape étant d'obtenir une dérivée axiale des images, au niveau du plan de mise au point, il est nécessaire de disposer d'au moins deux images de part et d'autre du plan de mise au point du système optique. L'échantillon 10 est donc disposé de part et d'autre du plan objet $P_o$ du système optique 16. Alternativement, le capteur d'image 20 est disposé de part et d'autre du plan image $P_i$ du système optique 16.

Etape 120 : détermination d'une variation axiale de l'intensité de l'onde lumineuse d'exposition 14.

A partir des images acquises, on détermine une dérivée axiale de l'intensité de l'onde lumineuse d'exposition 14 au niveau du plan objet $P_O$. Il s'agit de calculer une fonction dérivée $\frac{\partial I_0}{\partial z}$ à partir des images acquises dans l'étape 110.

Lorsqu'on dispose d'images $I_z$ et $I_{-z}$ acquises de part et d'autre d'une image focalisée $I_0$, la variation axiale peut être déterminée selon :

$$\frac{\partial I_0}{\partial z}(r) = \frac{I_z(r) - I_{-z}(r)}{2\delta z} \quad (3)$$

Selon un mode de réalisation préféré, on dispose de 5 images respectivement acquises selon les distances $z_1$, $z_2$, $z_0$, $-z_1$, $-z_2$, comme précédemment décrit. Dans ce cas, on peut obtenir $\frac{\partial I_0}{\partial z}(r)$ selon l'expression :

$$\frac{\partial I_0(r)}{\partial z} \approx \frac{4}{3}\left(\frac{I_{z1}(r) - I_{-z1}(r)}{2z_1}\right) - \frac{1}{3}\left(\frac{I_{z2}(r) - I_{-z2}(r)}{2z_2}\right) \quad (4)$$

Etape 130 : Calcul d'une image de phase.

A partir de la dérivée axiale $\frac{\partial I_0}{\partial z}$ calculée lors de l'étape 120 en différentes coordonnées radiales $r$, il est possible de calculer une image phase $I_\varphi$ en mettant en oeuvre une équation de transport d'intensité, cette dernière reliant, en différentes coordonnées $r$, le gradient de la phase à la dérivée axiale de l'intensité, selon l'expression suivante :

$$\nabla_\perp[I_0(r)\nabla_\perp\varphi(r)] = -k\frac{\partial I_0(r)}{\partial z} \quad (5),$$

$\nabla_\perp$ désignant l'opérateur gradient selon un plan perpendiculaire à l'axe de propagation Z.

- $I_0(r)$ est obtenu par l'acquisition d'une image focalisée de l'échantillon ;
- $\frac{\partial I_0}{\partial z}$ est obtenu par l'étape 120 ;
- $k$ représente le nombre d'onde. Pour déterminer $k$, on peut prendre la longueur d'onde correspondant à l'intensité maximale dans la bande spectrale considérée (maximum d'intensité spectrale).

L'équation (5) est connue de l'homme du métier et usuellement appelée équation de transport d'intensité. Elle relie une cartographie spatiale de la phase de l'onde lumineuse d'exposition 14 à la dérivée axiale de son intensité. Le recours à une telle équation a par exemple été décrit dans la publication Waller L.A "Computational phase imaging based on intensity transport", PhD thesis, Massachussets Institute of Technology, 2010. Elle est également décrite dans la publication Bostan E. "Phase retrieval by using transport of intensity équation and differential interférence contrast microscopy", ICIP 2014, pp 3939-3943.

L'équation de transport d'intensité peut être résolue en deux étapes, en introduisant une fonction auxiliaire $\psi$, comme décrit dans la publication Teague R "Deterministic phase retrieval : a Green's function solution", JOSA, vol. 73, n° 11, pp 1434-1441, 1983. La fonction auxiliaire $\psi$ est telle que :

$$\Delta_\perp\psi = I_0\nabla_\perp\varphi \quad (6)$$

L'expression (5) peut alors s'écrire :

$$\Delta_\perp\psi(r) = -k\frac{\partial I_0(r)}{\partial z} \quad (7)$$

Et

$$\Delta_\perp\varphi(r) = \frac{\nabla_\perp\psi(r)}{I_0(r)} \quad (8)$$

où $\Delta_\perp$ est l'opérateur laplacien dans un plan perpendiculaire à l'axe de propagation Z.

Les expressions (7) et (8) sont de type :

$$\Delta_\perp u = f \quad (9)$$

où $f$ est une fonction mesurée ou calculée et $u$ est la fonction que l'on cherche à obtenir.

Une solution d'une telle équation est :

$$U(v_x, v_y) = \frac{F}{H} = \frac{F}{(2i\pi)^2(v_x{}^2 + v_y{}^2) + \varepsilon} \quad (10)$$

Où :

- $U$ est la transformée de Fourier de la fonction $u$ que l'on cherche à déterminer, ou plus généralement une expression fréquentielle de la fonction $u$ ;
- $F$ est la transformée de Fourier de la fonction $f$ ;
- $H$ est la transformée de Fourier de l'opérateur laplacien ;
- $\varepsilon$ est un scalaire, permettant d'éviter que le dénominateur de l'expression (10) soit égal à 0. Il peut par exemple être choisi égal à $10^{-5}$ ;
- $v_x$ et $v_y$ sont les fréquences spatiales selon deux axes X et Y formant un repère orthonormé du plan de détection P.

L'étape 130 est décomposée en deux sous-étapes 131 et 132. La sous-étape 131 vise à déterminer une image de la fonction auxiliaire $I_\psi$ à partir de la dérivée axiale $\frac{\partial I_0}{\partial z}$ . L'image de la fonction auxiliaire $I_\psi$ comporte les valeurs de $\psi(r)$ en différentes coordonnées $r$.

La sous étape 132 vise à déterminer l'image de la phase $I_\varphi$ à partir de l'image de la fonction auxiliaire $I_\psi$. L'image de phase $I_\varphi$ comporte les valeurs de $\varphi(r)$ en différentes coordonnées r.

L'expression (10) est utilisée :

- une première fois, au cours de la sous-étape 131, pour déterminer la fonction auxiliaire $\psi$ en différentes coordonnées r. Au cours de cette sous étape, on résout l'équation (9) avec :

$$u = \psi \; ; f = -k\frac{\partial I_0(r)}{\partial z}$$

La résolution est effectuée en mettant en oeuvre l'équation (10) dans laquelle :

$$F = TF(f) = TF\left(-k\frac{\partial I_0}{\partial z}\right) \quad (11)$$

où $TF$ désigne l'opérateur transformée de Fourier, ou, de façon plus générale, une expression fréquentielle de $f$, et

$$U = TF(u) = TF(\psi) \quad (12)$$

- une deuxième fois, au cours de la sous-étape 132, pour déterminer le déphasage $\varphi$ en différentes coordonnées $r$. Au cours de cette sous étape, on résout l'équation (9) avec:

$$u = \varphi \; ; f = \frac{\nabla_\perp \psi}{I_0}$$

La résolution est effectuée en mettant en oeuvre l'équation (10) dans laquelle :

$$F = TF\left(\frac{\nabla_\perp \psi}{I_0}\right) \quad (11');$$

$$U = TF\,(u) = TF\,(\varphi) \quad (12');$$

Suite à la sous-étape 132, on détermine la phase de l'onde lumineuse d'exposition 14 en chaque coordonnée $r$ par :

$$\varphi(r) = TF^{-1}\,U\,(r) \quad (13)$$

On dispose alors une image $I_\varphi$ représentative de la phase de l'onde lumineuse d'exposition 14.

Etape 140 : caractérisation de l'échantillon.

A partir de l'image de phase $I_\varphi$, l'échantillon, et plus précisément, la topographie de la surface $10_s$ de l'échantillon, peut être caractérisée, en mettant en oeuvre l'équation (1). D'autres types de caractérisation sont envisageables, comme décrit par la suite.

Les étapes 120 à 140 montrent qu'à partir d'une dérivée axiale de l'intensité de l'onde lumineuse d'exposition, l'utilisation de l'équation de transport d'intensité permet une reconstruction de la phase de l'onde lumineuse, à partir de laquelle la caractérisation de l'échantillon peut être effectuée.

Cependant, pour des échantillons faiblement déphasants, le procédé tel que précédemment décrit présente certaines limites. Il est en particulier sensible au bruit affectant les images acquises. La reconstruction précédemment décrite propage ce bruit, par le biais de la résolution de l'équation de transport d'intensité. La propagation du bruit peut affecter significativement la reconstruction de l'image de phase, en générant des artéfacts. Les artéfacts peuvent prévaloir par rapport au déphasage réel induit par l'objet, en particulier lorsque le déphasage est faible. Il en résulte une détermination erronée de l'image de phase. Par échantillons faiblement déphasants, on entend un échantillon comportant des éléments déphasants dont les dimensions sont faibles (s'étendant par exemple selon moins de 100 pixels) et/ou présentant un faible contraste d'indice de réfraction par rapport au milieu ambiant.

Pour ce type d'échantillon, il est proposé une variante, selon laquelle on adapte la résolution de l'équation de transport d'intensité, en prenant en compte, lors de l'étape 130, le bruit d'acquisition des images défocalisées de l'échantillon. Plus précisément, il s'agit d'estimer un rapport signal sur bruit affectant les grandeurs reconstruites, et de prendre en compte le rapport signal sur bruit ainsi estimé lors de la résolution de l'équation de transport d'intensité.

Pour cela, l'expression (9) est remplacée par :

$$\Delta_\perp u + \mathrm{v} = f \quad (9')$$

Où v est une fonction bidimensionnelle représentant le bruit.

Le problème revient à déterminer une fonction $g$, de telle sorte que :

$$\hat{u} = g * f \quad (14),$$

où Û est une estimation de u minimisant l'erreur quadratique moyenne $\|u - \hat{u}\|^2$.

Le filtre de Wiener permet d'obtenir une estimation de $g$ satisfaisant à (14). La transformée de Fourier $G$ de la fonction $g$ est telle que :

$$G = \frac{H^* S}{|H|^2 S + N}\,(15)$$

où S est la densité spectrale de puissance de $u$ et $N$ est la densité spectrale de puissance de v.

De l'expression (15), on peut déduire que :

$$G = \frac{1}{H + \dfrac{H}{|H|^2}\dfrac{N}{S}} \quad (16)$$

Il vient :

$$U = F.G = \frac{F}{(2i\pi)^2\left(\nu_x{}^2 + \nu_y{}^2\right) + \dfrac{1}{(2i\pi)^2\left(\nu_x{}^2 + \nu_y{}^2\right)}\dfrac{N}{S}} \quad (17)$$

On note que le ratio $\frac{N}{S}$ correspond à l'inverse du rapport signal sur bruit $\frac{S}{N}$.

Au cours de la sous-étape 131, on résout l'équation (9') avec :

$$u = \psi \; ; f = -k\frac{\partial I_0(r)}{\partial z}$$

La résolution est effectuée en mettant en oeuvre l'expression (17) dans laquelle :

$$F = TF(f) = TF\left(-k\frac{\partial I_0}{\partial z}\right) \quad (18)$$

où *TF* désigne l'opérateur transformée de Fourier (ou plus généralement une expression fréquentielle) de la fonction $f$;

$$U = TF(u) = TF(\psi) \quad (19) \; ;$$

Il est nécessaire de prendre en compte les densités spectrales de puissance de bruit *N* et de signal *S*.

Pour déterminer la densité spectrale de puissance de bruit *N*, la sous-étape 131 comporte une prise en compte d'une image de calibration $I_b$ sans échantillon disposé entre la source de lumière utilisée (11 ou 11') et le capteur d'image 20. En supposant que le bruit d'acquisition est uniforme et de moyenne nulle (i-e bruit blanc), la densité spectrale de puissance du bruit *N* est telle que :

$$N = L_X L_Y \times \frac{-k}{2\delta z}\sigma_b{}^2 \quad (20)$$

où

- $\sigma_b$ est la variance de l'image de calibration $I_b$ ;
- $L_X$ et $L_Y$ sont les dimensions de l'image, en nombre de pixels, selon les axes X et Y précédemment définis.

L'acquisition de l'image de calibration $I_b$ fait l'objet d'une étape 90, préalable à l'étape 130.

La sous-étape 131 comporte également une prise en compte d'une densité spectrale de puissance *S* de la fonction auxiliaire $\psi$. La valeur de *S* peut être déterminée à priori, par exemple en calibrant le dispositif à l'aide d'un échantillon de calibration induisant un déphasage connu. Ainsi, l'image de phase $I_\varphi$ de l'échantillon de calibration est connue.

La calibration consiste à prendre en compte différentes valeurs de densité spectrale de puissance $S_\psi$ de la fonction auxiliaire $\psi$, de façon à sélectionner la valeur permettant, après reconstruction, d'obtenir une image de la fonction auxiliaire cohérente avec l'image $I_\psi$ de la fonction auxiliaire correspondant à l'échantillon de calibration.

Au cours de la sous-étape 132, on résout l'équation (9') avec :

$$u = \varphi \; ; f = \frac{\nabla_\perp \psi}{I_0}$$

$\psi$ correspond à la fonction auxiliaire déterminée lors de la sous-étape 131, L'expression (17) est utilisée une pour déterminer la phase $\varphi$, avec :

$$F = TF(f) = TF\left(\frac{\nabla_\perp \psi}{I_0}\right) \quad (18');$$

$$U = TF(u) = TF(\varphi) \quad (19');$$

Il est nécessaire de prendre en compte les densités spectrales de puissance de bruit *N* et du signal *S*.

La densité spectrale de puissance de bruit *N* est déterminée en calculant l'écart-type d'une partie de l'image de la fonction auxiliaire $I_\psi$ résultant de la sous-étape 131. La partie de l'image sélectionnée correspond à une zone de bruit de l'image $I_\psi$. La sous-étape 132 comporte également une prise en compte d'une densité spectrale de puissance $S_\varphi$ de la phase $\varphi$. La valeur de $S_\varphi$ peut être déterminée à priori, par exemple en calibrant le dispositif à l'aide d'un échantillon de calibration générant un déphasage connu.

La calibration consiste à prendre en compte différentes valeurs de densité spectrale de puissance *S* de l'image de phase $I_\varphi$, de façon à sélectionner la valeur permettant d'obtenir, après reconstruction, une image de phase cohérente avec l'image de phase $I_\varphi$ correspondant à l'échantillon de calibration.

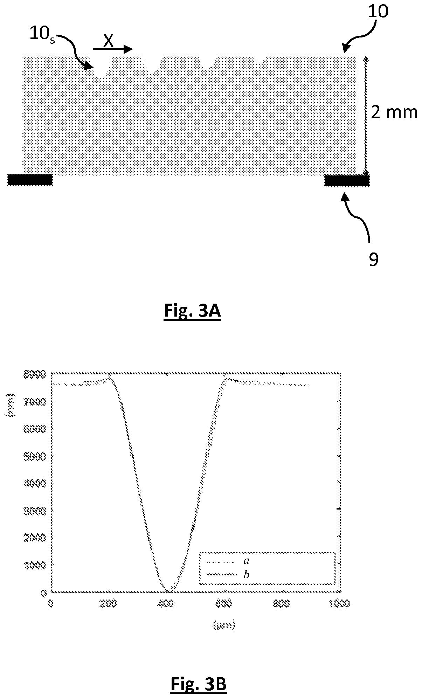

La méthode exposée ci-dessus a été mise en oeuvre, en transmission, avec un premier échantillon de test. Cet échantillon était en verre. Il présentait une surface $10_s$ structurée comme représenté sur la figure 3A. L'échantillon s'étendait selon une épaisseur de 2 mm. On a utilisé un système optique 16 tel que représenté sur la figure 1A, dont le grandissement est de 1 : 1. Cela permet d'obtenir un champ d'observation étendu, dont la surface correspond à la surface utile du capteur d'image, soit 30 mm². La surface $10_s$ présentait des creux, formant des défauts de surface, dont la profondeur, perpendiculairement à la surface de l'échantillon, était comprise entre 5 et 20 $\mu$m. Chaque creux correspond à un élément déphasant. Ces creux peuvent correspondre à la réalisation d'un microcanal s'étendant parallèlement à la surface de l'échantillon. La figure 3B montre un profil de l'épaisseur optique correspondant à un creux, mesuré par une méthode de référence (caméra SID4Bio - Phasics) - courbe b - ainsi qu'un profil reconstruit en appliquant la méthode décrite ci-avant (courbe a). On observe que le profil résultant de la méthode correspond à une bonne caractérisation de la surface de l'échantillon.

Sur la figure 3B, les axes des abscisses et des ordonnées correspondent respectivement à des microns et à des nanomètres. L'axe des abscisses correspond à une direction X représentée sur la figure 3A, tandis que l'axe des ordonnées correspond à une différence d'épaisseur optique.

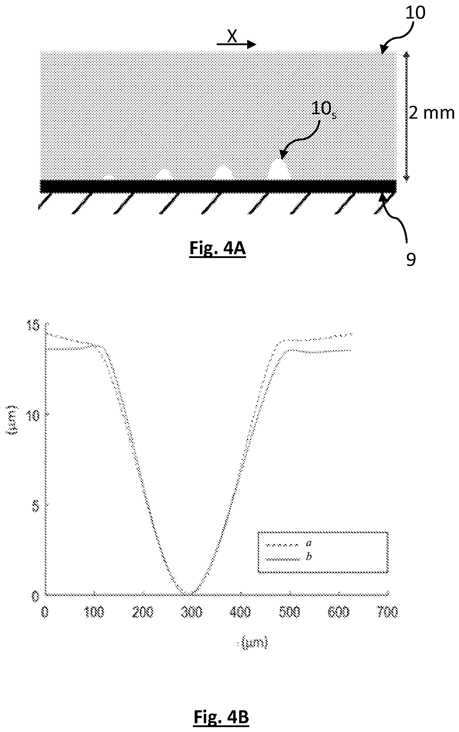

La méthode exposée ci-dessus a été mise en oeuvre, en réflexion, avec le premier échantillon de test, comme représenté sur la figure 4A. L'échantillon de test a été caractérisé selon la configuration en transmission, de façon similaire à la configuration représentée sur la figure 3A. L'échantillon de test a été retourné et disposé sur un support réfléchissant 9. On a utilisé un système optique 16 tel que représenté sur la figure 1B, dont le grandissement est de 1 : 10. Cela permet d'obtenir un champ d'observation égal à 0.56 mm². La figure 4B montre le profil de l'épaisseur optique d'un creux obtenu selon la configuration en transmission (courbe b), et le profil du même creux obtenu selon la configuration en réflexion (courbe a). Les deux profils sont cohérents. Sur la figure 4B, les axes des abscisses et des ordonnées correspondent respectivement à des microns. L'axe des abscisses correspond à une direction X représentée sur la figure 4A, tandis que l'axe des ordonnées correspond à une différence d'épaisseur optique.

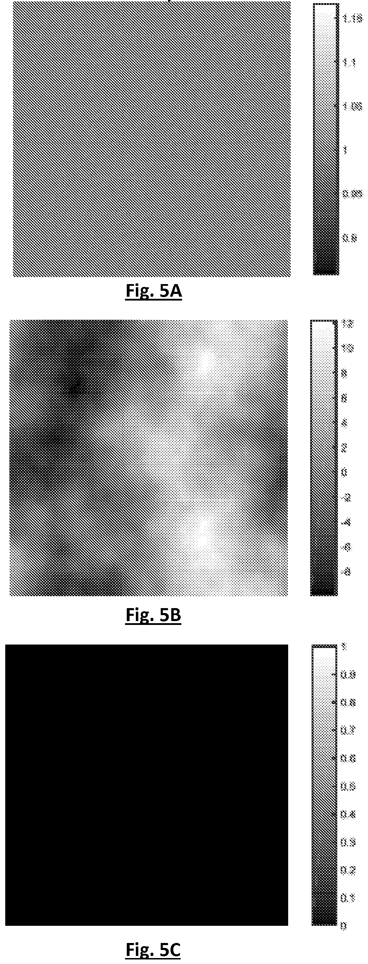

On a testé la méthode décrite ci-avant, selon une configuration en transmission, en simulant une acquisition d'images sans objet entre la source de lumière 11 et le capteur d'image 20. La figure 5A montre une image simulée. La figure 5B montre une image de phase résultant d'une mise en oeuvre de l'algorithme ci-dessus, basée sur l'équation (10), sans prise en compte du bruit affectant les images acquises. La figure 5C montre une image de phase résultant d'une mise en oeuvre de l'algorithme ci-dessus, basée sur l'équation (17), en prenant en compte le bruit affectant les images acquises.

On observe que la figure 5C est homogène et nulle, ce qui est attendu en l'absence d'objet, tandis que la figure 5B est affectée d'un bruit important. La variante exposée ci-dessus, permettant une prise en compte du bruit, s'avère donc nettement plus précise et quantitative.

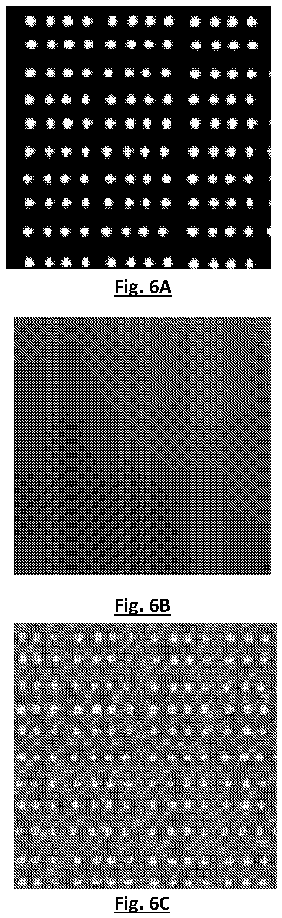

Dans un autre essai, on a simulé une reconstruction d'une image de phase, comportant 2000 x 2000 pixels, dont un détail est représenté sur la figure 6A. Le détail comporte des objets de phase homogènes prenant la forme de disques de diamètre 8 pixels. Un bruit de Poisson, supposé correspondre au bruit du capteur d'image, a été pris en compte dans les simulations. On a simulé une reconstruction de l'image de phase sans prise en compte du bruit (cf. figure 6B), et en prenant en compte le bruit (cf. figure 6C). On observe que sans prise en compte du bruit, l'image de phase reconstruite n'est pas exploitable. En revanche, la prise en compte du bruit permet d'obtenir une image de phase réaliste.

On a mis en oeuvre la méthode prenant en compte le bruit des images acquises sur une mire de phase USAF (United States Air Force). On a utilisé la configuration en transmission (cf. figure 1A). Pour cela, on a effectué des images défocalisées de la mire selon des distances de défocalisation respectivement égales à - 200 $\mu$m, -150 $\mu$m, -100 $\mu$m, -

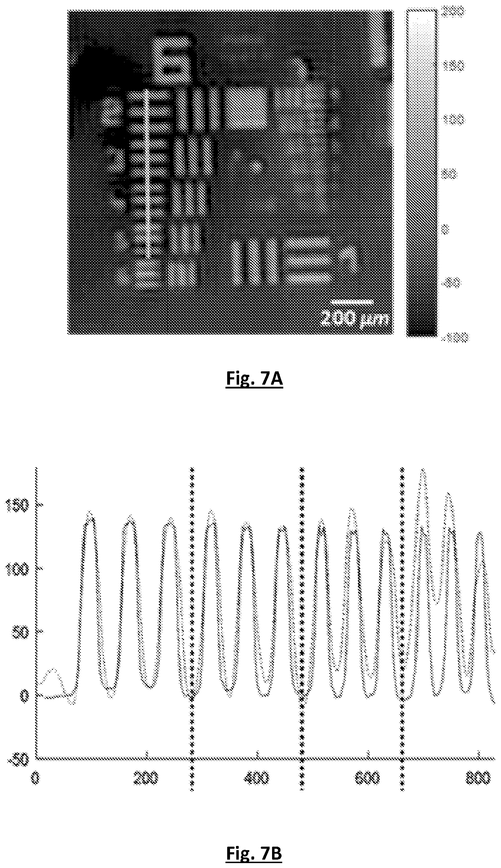

50 $\mu$m, 0 $\mu$m (image nette) , + 50 $\mu$m, +100 $\mu$m, +150 $\mu$m et + 200 $\mu$m. Le fait d'acquérir un grand nombre d'images défocalisées, de part et d'autre du plan de mise au point (0 $\mu$m), permet d'améliorer la précision avec laquelle la dérivée axiale de l'intensité $\frac{\partial I_0}{\partial z}$ est calculée. On a comparé l'image de phase reconstruite avec une image obtenue en utilisant un dispositif commercial (référence SID4Bio - société Phasics). La figure 7A correspond à l'image de phase reconstruite en mettant en oeuvre l'invention. La figure 7B montre des profils d'images de phase respectivement obtenu avec l'image de phase reconstruite en mettant en oeuvre l'invention (courbe en pointillés) et l'image de phase reconstruite à l'aide du dispositif commercial de référence (courbe en trait plein). L'axe des ordonnées correspond à une différence de trajet optique, exprimée en nm, cette grandeur représentant le déphasage. L'axe des abscisses correspond à la ligne selon laquelle est réalisée les profils, l'unité étant le $\mu$m.

Bien que décrite en lien avec une caractérisation de l'état de surface d'un échantillon transparent, l'invention peut être mise en oeuvre à d'autres fins, par exemple une caractérisation d'éléments ou de particules disposées dans un échantillon. Il peut par exemple s'agir de particules sanguines, par exemple des globules blancs ou des plaquettes, ou des microorganismes. L'invention peut alors trouver des applications dans le domaine de la santé ou de l'agroalimentaire. Lorsque l'échantillon est transparent, l'invention peut être mise en oeuvre en transmission (cf. figure 1A) ou en réflexion (figure 1B), la configuration en réflexion supposant le recours à un support d'échantillon réfléchissant..

## Revendications

1.  Procédé de caractérisation d'un échantillon (10), s'étendant selon un plan d'échantillon, le procédé comportant les étapes suivantes:

    a) illumination de l'échantillon à l'aide d'une source de lumière (11, 11'), de telle sorte que sous l'effet de l'illumination, un capteur d'image (20) est exposé à une onde lumineuse d'exposition (14) transmise ou réfléchie par l'échantillon, se propageant parallèlement à un axe de propagation (Z), le capteur d'image définissant un plan de détection (P) (étape 100);
    b) obtention de plusieurs images ($I_z$) de l'échantillon à l'aide du capteur d'image, le capteur d'image étant associé à un système optique (16) s'étendant entre le capteur d'image et l'échantillon, le système optique définissant un plan image ($P_i$) et un plan objet ($P_o$), de telle sorte que lors de l'acquisition de plusieurs images :

        - le plan objet ($P_o$) est décalé par rapport au plan d'échantillon, selon une distance de défocalisation objet, et/ou le plan image est décalé par rapport à un plan de détection, d'une distance de défocalisation image;
        - les distances de défocalisation objet ou les distances de défocalisation image respectivement associées à deux images différentes étant distinctes (étape 110) ;

    c) à partir de chaque image ($I_z$), calcul, en différentes coordonnées radiales ($r$), selon le plan de détection ($P$), d'une variation axiale de l'intensité de l'onde lumineuse d'exposition (14) selon l'axe de propagation (Z) (étape 120);
    d) à partir de la variation calculée lors de l'étape c), obtention d'une image de phase ($I_\varphi$) de l'onde lumineuse d'exposition (14), l'image de phase représentant une cartographie d'un déphasage, induit par l'échantillon, de l'onde lumineuse d'exposition (14) dans le plan de détection (étape 130) ;
    e) caractérisation de l'échantillon à partir de l'image de phase obtenue ($I_\varphi$) (étape 140) ;
    le procédé étant **caractérisé en ce qu'**il comporte une acquisition d'une image de calibration ($I_b$) par le capteur d'image, le capteur d'image étant illuminé sans échantillon disposé entre le capteur d'image et la source de lumière, un bruit affectant chaque image acquise étant défini, en différentes coordonnées radiales ($r$) du plan de détection (P), à partir de l'image de calibration;
    et **en ce que** l'étape d) comporte une prise en compte du bruit affectant chaque image acquise lors de l'étape b) ;
    le procédé étant tel que l'étape d) comporte, en chaque coordonnée radiale, les sous-étapes suivantes :

        di) détermination d'une image d'une fonction auxiliaire ($I_\psi$), la fonction auxiliaire ($\psi$) étant estimée, en plusieurs coordonnées radiales ($r$), à partir de la variation axiale de l'intensité de l'onde lumineuse d'exposition (étape 131) ;
        dii) détermination de l'image de phase ($I_\varphi$), à partir d'un gradient de la fonction auxiliaire ($\nabla_{\perp}\psi$) calculé en plusieurs coordonnées radiales ($r$) (étape 132) ;

    le procédé étant tel que :

- la sous-étape di) comporte une estimation d'une densité spectrale de bruit, à partir de l'image de calibration ($I_b$);
- la sous-étape di) comporte une prise en compte d'une densité spectrale de puissance de la fonction auxiliaire ($S_\psi$) ;
- la sous-étape dii) comporte une estimation d'une densité spectrale de bruit à partir de l'image ($I_\psi$) de la fonction auxiliaire résultant de la sous-étape di);
- la sous-étape dii) comporte une prise en compte d'une densité spectrale de puissance de la phase ($S_\varphi$).

2. Procédé selon la revendication 1, dans lequel :

   - la sous-étape di) comporte une résolution d'une équation de type :

$$\Delta_\perp u + \mathrm{v} = f$$

   où :

   - $\Delta_\perp$ est l'opérateur laplacien dans un plan perpendiculaire à l'axe de propagation (Z);
   - $u$ est la fonction auxiliaire ($\psi$) à estimer;
   - $f$ est une fonction correspondant à la variation axiale de l'intensité de l'onde lumineuse d'exposition multipliée par le nombre d'onde de cette dernière;
   - v est un terme de bruit;

   - la sous-étape dii) comporte une résolution d'une équation de type :

$$\Delta_\perp u + \mathrm{v} = f$$

   où :

   - $\Delta_\perp$ est l'opérateur laplacien dans un plan perpendiculaire à l'axe de propagation (Z);
   - $u$ est la phase ($\varphi$) à estimer ;
   - $f$ est une fonction correspondant un gradient de la fonction auxiliaire, déterminée lors de la sous-étape di), divisée par une intensité d'une image acquise lors de l'étape b) ;
   - v est un terme de bruit.

3. Procédé selon la revendication 1 ou la revendication 2, dans lequel

   - lors de la sous-étape di), on détermine une expression fréquentielle de la fonction auxiliaire à partir d'un ratio

$$\frac{F}{(2i\pi)^2\left(v_x{}^2 + v_y{}^2\right) + \dfrac{1}{(2i\pi)^2\left(v_x{}^2 + v_y{}^2\right)}\dfrac{N}{S}}$$

   où :

   - $F$ est une expression fréquentielle de la fonction de la variation axiale de l'intensité de l'onde lumineuse d'exposition multipliée par le nombre d'onde;
   - $\dfrac{N}{S}$ est une estimation du rapport signal à bruit affectant ladite expression fréquentielle, $N$ correspondant à la densité spectrale de puissance du bruit, obtenue à partir de l'image de calibration, $S$ étant la densité spectrale de puissance assignée à la fonction auxiliaire ;
   - $v_x$ et $v_y$ sont les fréquences spatiales selon deux axes X et Y du plan de détection ;

   - lors de la sous-étape dii), on détermine une expression fréquentielle de la phase, à partir d'un ratio

$$\frac{F}{(2i\pi)^2\big(v_x{}^2 + v_y{}^2\big) + \dfrac{1}{(2i\pi)^2\big(v_x{}^2 + v_y{}^2\big)}\dfrac{N}{S}}$$

où :

• $F$ est une expression fréquentielle du gradient de la fonction auxiliaire, déterminée lors de la sous-étape di), divisée par une intensité d'une image acquise lors de l'étape b) ;

• $\dfrac{N}{S}$ est une estimation du rapport signal à bruit de ladite expression fréquentielle, $N$ correspondant à la densité spectrale de puissance du bruit, obtenue à partir de l'image de la fonction auxiliaire ($I_\psi$) résultant de la sous-étape di), $S$ étant la densité spectrale de puissance assignée à l'image de phase ;

• $v_x$ et $v_y$ sont les fréquences spatiales selon deux axes X et Y du plan de détection.

4. Procédé selon l'une quelconque des revendications précédentes, dans lequel :

   - lors de l'étape a) la surface de l'échantillon illuminée est supérieure à 10 mm$^2$ ;
   - lors de l'étape b), chaque image acquise représente une surface d'échantillon supérieure à 10 mm$^2$.

5. Procédé selon l'une quelconque des revendications précédentes, dans lequel l'étape b) comporte une acquisition d'une image de l'échantillon selon une configuration focalisée, de telle sorte que le plan image du système optique correspond au plan de détection et que le plan objet du système optique correspond à un plan selon lequel s'étend l'échantillon.

6. Procédé selon l'une quelconque des revendications précédentes, dans lequel l'échantillon est disposé entre la source de lumière et le capteur d'image, de telle sorte que l'onde lumineuse d'exposition est une onde lumineuse ayant traversé l'échantillon, de la source de lumière vers le capteur d'image.

7. Procédé selon l'une quelconque des revendications 1 à 5, dans lequel l'échantillon est réfléchissant ou est disposé sur un support réfléchissant, de telle sorte que l'onde lumineuse d'exposition, est une onde lumineuse réfléchie par l'échantillon ou par le support réfléchissant.

8. Procédé selon l'une quelconque des revendications précédentes, dans lequel l'échantillon présente une surface structurée, et dans lequel la caractérisation de l'échantillon est une caractérisation de la structuration de la surface de l'échantillon.

9. Procédé selon l'une quelconque des revendications précédentes, dans lequel l'échantillon comporte des particules, la caractérisation de l'échantillon étant une caractérisation des particules de l'échantillon.

10. Dispositif (1) de caractérisation d'un échantillon comportant :

    - une source de lumière (11, 11') ;
    - un support d'échantillon (9), configuré pour recevoir un échantillon ;
    - un capteur d'image (20), associé à un système optique (16), pour former une image de l'échantillon, lorsqu'il est disposé sur le support d'échantillon, le système optique définissant un plan objet ($P_o$) et un plan image ($P_i$), le dispositif étant tel que :

      • le capteur d'image (20) peut être déplacé par rapport au plan image ;
      • et/ou l'échantillon peut être déplacé par rapport au plan objet ;

    - une unité de traitement (22), configurée pour :

      • prendre en compte une image de calibration acquise par le capteur d'image, le capteur d'image étant illuminé sans échantillon disposé entre le capteur d'image et la source de lumière ;
      • définir un bruit affectant chaque image acquise, en différentes coordonnées radiales (r) du plan de détection (P), à partir de l'image de calibration ;

• mettre en oeuvre les étapes c) et d) d'un procédé selon l'une quelconque des revendications précédentes ; à partir des images acquises par le capteur d'image.

**11.** Dispositif selon la revendication 10, comportant :

- une première source de lumière (11), configurée pour illuminer l'échantillon, lorsqu'il est maintenu sur le support, de telle sorte que l'échantillon est disposé entre la source de lumière et le capteur d'image;
- une deuxième source de lumière (11'), configurée pour illuminer l'échantillon, lorsqu'il est maintenu sur le support, de telle sorte que l'échantillon ou le support d'échantillon réfléchit la lumière vers le capteur d'image.

**Patentansprüche**

**1.** Verfahren zur Charakterisierung einer sich gemäß einer Probenebene erstreckenden Probe (10), wobei das Verfahren die folgenden Schritte aufweist:

a) Beleuchtung der Probe mit Hilfe einer Lichtquelle (11, 11') derart, dass ein Bildsensor (20) unter der Wirkung der Beleuchtung einer von der Probe übertragenen oder reflektierten Belichtungslichtwelle (14) ausgesetzt ist, die sich parallel zu einer Ausbreitungsachse (Z) ausbreitet, wobei der Bildsensor eine Erkennungsebene (P) definiert (Schritt 100):
b) Erhalt mehrerer Bilder (I$_z$) der Probe mit Hilfe des Bildsensors, wobei der Bildsensor einem optischen System (16) zugeordnet ist, das sich zwischen dem Bildsensor und der Probe erstreckt, wobei das optische System eine Bildebene (P$_i$) und eine Objektebene (P$_o$) definiert, so dass bei der Erfassung mehrerer Bilder:

- die Objektebene (P$_o$) bezüglich der Probenebene gemäß einem Objekt-Defokussierungsabstand versetzt ist, und/oder die Bildebene bezüglich einer Erkennungsebene um einen Bild-Defokussierungsabstand versetzt ist ;
- wobei die zwei verschiedenen Bildern zugeordneten Objekt-Defokussierungsabstände oder Bild-Defokussierungsabstände sich unterscheiden (Schritt 110) ;

c) ausgehend von jedem Bild (I$_z$), Berechnung, in verschiedenen radialen Koordinaten (r), gemäß der Erkennungsebene (P), einer axialen Variation der Stärke der Belichtungslichtwelle (14) gemäß der Ausbreitungsachse (Z) (Schritt 120);
d) ausgehend von der im Schritt c) berechneten Variation, Erhalt eines Phasenbilds (I$_\varphi$) der Belichtungslichtwelle (14), wobei das Phasenbild eine Kartographie einer durch die Probe induzierten Phasenverschiebung der Belichtungslichtwelle (14) in der Erkennungsebene (Schritt 130) darstellt;
e) Charakterisierung der Probe ausgehend vom erhaltenen Phasenbild (I$_\varphi$) (Schritt 140) ;
wobei das Verfahren **dadurch gekennzeichnet ist, dass** es eine Erfassung eines Kalibrierungsbilds durch den Bildsensor aufweist, wobei der Bildsensor ohne zwischen dem Bildsensor und der Lichtquelle angeordneter Probe beleuchtet wird, wobei ein jedes erfasste Bild beeinflussendes Rauschen in verschiedenen radialen Koordinaten (r) der Erkennungsebene (P) ausgehend vom Kalibrierungsbild definiert wird ;
und dass der Schritt d) eine Berücksichtigung des jedes im Schritt b) erfasste Bild beeinflussenden Rauschens aufweist) ;
wobei das Verfahren so ist, dass der Schritt d) in jeder radialen Koordinate die folgenden Teilschritte aufweist:

di) Bestimmung eines Bilds einer Hilfsfunktion (I$_\psi$), wobei die Hilfsfunktion ($\psi$) in mehreren radialen Koordinaten (r) ausgehend von der axialen Variation der Stärke der Belichtungslichtwelle geschätzt wird (Schritt 131) ;
dii) Bestimmung des Phasenbilds (I$_\varphi$) ausgehend von einem Gradienten der Hilfsfunktion ($\nabla_\perp\psi$) berechnet in mehreren radialen Koordinaten (r) (Schritt 132) ;

wobei das Verfahren derart ist, dass :

- der Teilschritt di) eine Schätzung einer spektralen Rauschdichte ausgehend vom Kalibrierungsbild (I$_b$) aufweist;
- der Teilschritt di) eine Berücksichtigung einer spektralen Leistungsdichte der Hilfsfunktion (S$_\psi$) aufweist;
- der Teilschritt dii) eine Schätzung einer spektralen Rauschdichte ausgehend vom Bild (I$_\psi$) der Hilfsfunktion aufweist, die aus dem Teilschritt di) resultiert;

- der Teilschritt dii) eine Berücksichtigung einer spektralen Leistungsdichte der Phase ($S_\varphi$) aufweist.

2. Verfahren nach Anspruch 1, wobei:

- der Teilschritt di) eine Lösung einer Gleichung des Typs aufweist:

$$\Delta_\perp u + v = f$$

wobei:

- $\Delta_\perp$ der Laplace-Operator in einer Ebene lotrecht zur Ausbreitungsachse (Z) ist,
- $u$ die zu schätzende Hilfsfunktion ($\psi$) ist;
- $f$ eine Funktion entsprechend der axialen Variation der Stärke der Belichtungslichtwelle multipliziert mit deren Wellenzahl ist ;
- $v$ ein Rauschterm ist ;

- der Teilschritt dii) eine Lösung einer Gleichung des Typs aufweist:

$$\Delta_\perp u + v = f$$

wobei:

- $\Delta_\perp$ der Laplace-Operator in einer Ebene lotrecht zur Ausbreitungsachse (Z) ist;
- $u$ die zu schätzende Phase ($\varphi$) ist ;
- $f$ eine Funktion entsprechend einem Gradienten der Hilfsfunktion ist, bestimmt im Teilschritt di), dividiert durch eine Stärke eines im Schritt b) erfassten Bilds ;
- $v$ ein Rauschterm ist.

3. Verfahren nach Anspruch 1 oder Anspruch 2, wobei

- im Teilschritt di) ein Frequenzausdruck der Hilfsfunktion ausgehend von einem Quotienten bestimmt wird

$$\frac{F}{(2i\pi)^2\left(v_x{}^2 + v_y{}^2\right) + \dfrac{1}{(2i\pi)^2\left(v_x{}^2 + v_y{}^2\right)}\dfrac{N}{S}}$$

wobei:

- $F$ ein Frequenzausdruck der Funktion der axialen Variation der Stärke der Belichtungslichtwelle multipliziert mit der Wellenzahl ist;
- $\dfrac{N}{S}$ eine Schätzung des den Frequenzausdruck beeinträchtigenden Signal-Rausch-Verhältnisses ist, das, wobei N der ausgehend vom Kalibrierungsbild erhaltenen Leistungsspektraldichte des Rauschens entspricht, S die der Hilfsfunktion zugewiesene Leistungsspektraldichte ist;
- $v_x$ und $v_y$ die Raumfrequenzen gemäß zwei Achsen X und Y der Erkennungsebene sind;

- im Teilschritt dii) ein Frequenzausdruck der Phase ausgehend von einem Quotienten bestimmt wird

$$\frac{F}{(2i\pi)^2\left(v_x{}^2 + v_y{}^2\right) + \dfrac{1}{(2i\pi)^2\left(v_x{}^2 + v_y{}^2\right)}\dfrac{N}{S}}$$

wobei:

- $F$ ein Frequenzausdruck des Gradienten der im Teilschritt di) bestimmten Hilfsfunktion ist, dividiert durch eine Stärke eines im Schritt b) erfassten Bilds;
- $\frac{N}{S}$ eine Schätzung des Signal-Rausch-Verhältnisses des Frequenzausdrucks ist, wobei N der ausgehend von dem aus dem Teilschritt di) resultierenden Bild der Hilfsfunktion ($I_\psi$), erhaltenen Leistungsspektraldichte des Rauschens entspricht, S die dem Phasenbild zugewiesene Leistungsspektraldichte ist;
- $v_x$ und $v_y$ die Raumfrequenzen gemäß zwei Achsen X und Y der Erkennungsebene sind.

4. Verfahren nach einem der vorhergehenden Ansprüche, wobei:

- im Schritt a) die beleuchtete Fläche der Probe größer als 10 mm$^2$ ist;
- im Schritt b) jedes erfasste Bild eine Probenfläche größer als 10 mm$^2$ darstellt.

5. Verfahren nach einem der vorhergehenden Ansprüche, wobei der Schritt b) eine Erfassung eines Bilds der Probe gemäß einer fokussierten Konfiguration aufweist, so dass die Bildebene des optischen Systems der Erkennungsebene entspricht und die Objektebene des optischen Systems einer Ebene entspricht, gemäß der die Probe sich erstreckt.

6. Verfahren nach einem der vorhergehenden Ansprüche, wobei die Probe zwischen der Lichtquelle und dem Bildsensor angeordnet ist, so dass die Belichtungslichtwelle eine Lichtwelle ist, die die Probe von der Lichtquelle zum Bildsensor durchquert hat.

7. Verfahren nach einem der Ansprüche 1 bis 5, wobei die Probe reflektierend oder auf einem reflektierenden Träger angeordnet ist, so dass die Belichtungslichtwelle eine Lichtwelle ist, die von der Probe oder vom reflektierenden Träger reflektiert wird.

8. Verfahren nach einem der vorhergehenden Ansprüche, wobei die Probe eine strukturierte Fläche aufweist, und wobei die Charakterisierung der Probe eine Charakterisierung der Strukturierung der Fläche der Probe ist.

9. Verfahren nach einem der vorhergehenden Ansprüche, wobei die Probe Teilchen aufweist, wobei die Charakterisierung der Probe eine Charakterisierung der Teilchen der Probe ist.

10. Vorrichtung (1) zur Charakterisierung einer Probe, die aufweist:

- eine Lichtquelle (11, 11');
- einen Probenträger (9), konfiguriert, um eine Probe aufzunehmen ;
- einen einem optischen System (16) zugeordneten Bildsensor (20), um ein Bild der Probe zu formen, wenn sie auf dem Probenträger angeordnet ist, wobei das optische System eine Objektebene ($P_o$) und eine Bildebene ($P_i$) definiert, wobei die Vorrichtung so ist, dass :

  - der Bildsensor (20) bezüglich der Bildebene verschoben werden kann;
  - und/oder die Probe bezüglich der Objektebene verschoben werden kann;

- eine Verarbeitungseinheit (22), konfiguriert, um :

  - ein vom Bildsensor erfasstes Kalibrierungsbild zu berücksichtigen, wobei der Bildsensor ohne zwischen dem Bildsensor und der Lichtquelle angeordneter Probe beleuchtet wird;
  - ein jedes erfasste Bild beeinflussendes Rauschen in verschiedenen radialen Koordinaten (r) der Erkennungsebene (P) ausgehend vom Kalibrierungsbild zu definieren ;
  - die Schritte c) und d) eines Verfahrens nach einem der vorhergehenden Ansprüche ausgehend von den vom Bildsensor erfassten Bildern durchzuführen.

11. Vorrichtung nach Anspruch 10, die aufweist:

- eine erste Lichtquelle (11), konfiguriert, um die Probe zu beleuchten, wenn sie auf dem Träger gehalten wird, derart, dass die Probe zwischen der Lichtquelle und dem Bildsensor angeordnet ist ;
- eine zweite Lichtquelle (11'), konfiguriert, um die Probe zu beleuchten, wenn sie auf dem Träger gehalten wird, derart, dass die Probe oder der Probenträger das Licht zum Bildsensor reflektiert.

**Claims**

1. Method for characterizing a sample (10), lying in a sample plane, the method comprising the following steps:

a) illuminating the sample using a light source (11, 11'), such that, under the effect of illumination, an image sensor (20) is exposed to an exposure light wave (14) that is transmitted or reflected by the sample, and that propagates parallel to a propagation axis (Z), the image sensor defining a detection plane (P) (step 100);
b) obtaining a plurality of images ($I_z$) of the sample using the image sensor, the image sensor being associated with an optical system (16) lying between the image sensor and the sample, the optical system defining an image plane ($P_i$) and an object plane ($P_o$), such that during acquisition of a plurality of images:

- the object plane ($P_o$) is offset, with respect to the sample plane, by an object defocus distance, and/or the image plane is offset, with respect to a detection plane, by an image defocus distance;
- the object defocus distances or the image defocus distances respectively associated with two different images being different (step 110);

c) based on each image ($I_z$), computing, at various radial coordinates (r), in the detection plane (P), an axial variation in the intensity of the exposure light wave (14) along the propagation axis (Z) (step 120);
d) based on the variation computed in step c), obtaining a phase image ($I_\varphi$) of the exposure light wave (14), the phase image being a map of a phase shift, induced by the sample, of the exposure light wave (14) in the detection plane (step 130);
e) characterizing the sample based on the obtained phase image ($I_\varphi$) (step 140);
the method being **characterized in that** it comprises acquiring a calibration image ($I_b$) by means of the image sensor, the image sensor being illuminated without any sample placed between the image sensor and the light source, noise affecting each acquired image being defined, at various radial coordinates (r) of the detection plane (P), based on the calibration image;
and **in that** step d) comprises taking into account the noise affecting each image acquired in step b);
the method being such that step d) comprises, at each radial coordinate, the following sub-steps:

di) determining an image ($I_\Psi$) of an auxiliary function, the auxiliary function ($\Psi$) being estimated, at a plurality of radial coordinates (r), based on the axial variation in the intensity of the exposure light wave (step 131);
dii) determining the phase image ($I_\varphi$), based on a gradient ($\nabla_\perp \Psi$) of the auxiliary function computed at a plurality of radial coordinates (r) (step 132);

the method being such that:

- sub-step di) comprises estimating a noise spectral density, based on the calibration image ($I_b$);
- sub-step di) comprises taking into account a power spectral density ($S_\Psi$) of the auxiliary function;
- sub-step dii) comprises estimating a noise spectral density, based on the image ($I_\Psi$) of the auxiliary function resulting from sub-step di);
- sub-step dii) comprises taking into account a power spectral density ($S_\varphi$) of the phase.

2. Method according to Claim 1, wherein:

- sub-step di) comprises solving an equation of type:

$$\Delta_\perp u + v = f$$

where:

• $\Delta_\perp$ is the Laplace operator in a plane perpendicular to the propagation axis (Z);
• u is the auxiliary function ($\Psi$) to be estimated;

• *f* is a function corresponding to the axial variation in the intensity of the exposure light wave multiplied by the wavenumber of the latter;
• *v* is a noise term;

- sub-step dii) comprises solving an equation of type:

$$\Delta_\perp u + v = f$$

where:

• $\Delta_\perp$ is the Laplace operator in a plane perpendicular to the propagation axis (*Z*);
• *u* is the phase ($\varphi$) to be estimated;
• *f* is a function corresponding to a gradient of the auxiliary function, determined in sub-step di), divided by an intensity of an image acquired in step b);
• *v* is a noise term.

3. Method according to Claim 1 or Claim 2, wherein

- in sub-step di), a frequency-domain expression is determined for the auxiliary function based on a ratio

$$\frac{F}{(2i\pi)^2\left(v_x^2 + v_y^2\right) + \dfrac{1}{(2i\pi)^2\left(v_x^2 + v_y^2\right)}\dfrac{N}{S}}$$

where:

• *F* is a frequency-domain expression for the function of the axial variation in the intensity of the exposure light wave multiplied by the wavenumber;
• $\dfrac{N}{S}$ is an estimate of the signal-to-noise ratio affecting said frequency-domain expression, *N* corresponding to the noise power spectral density, obtained based on the calibration image, *S* being the power spectral density assigned to the auxiliary function;
• $v_x$ and $v_y$ are spatial frequencies along two axes X and Y of the detection plane;

- in sub-step dii), a frequency-domain expression is determined for the phase based on a ratio

$$\frac{F}{(2i\pi)^2\left(v_x^2 + v_y^2\right) + \dfrac{1}{(2i\pi)^2\left(v_x^2 + v_y^2\right)}\dfrac{N}{S}}$$

where:

• *F* is a frequency-domain expression for the gradient of the auxiliary function, determined in sub-step di), divided by an intensity of an image acquired in step b);
• $\dfrac{N}{S}$ is an estimate of the signal-to-noise ratio of said frequency-domain expression, *N* corresponding to the noise power spectral density, obtained based on the image ($I_\Psi$) of the auxiliary function resulting from sub-step di), S being the power spectral density assigned to the phase image;
• $v_x$ and $v_y$ are spatial frequencies along two axes X and Y of the detection plane.

4. Method according to any one of the preceding claims, wherein:

- in step a), the illuminated area of the sample is larger than 10 mm$^2$;
- in step b), each acquired image represents a sample area larger than 10 mm$^2$.

**5.** Method according to any one of the preceding claims, wherein step b) comprises acquiring an image of the sample in a focused configuration, such that the image plane of the optical system corresponds to the detection plane and such that the object plane of the optical system corresponds to a plane in which the sample lies.

**6.** Method according to any one of the preceding claims, wherein the sample is placed between the light source and the image sensor, such that the exposure light wave is a light wave that has passed through the sample, from the light source to the image sensor.

**7.** Method according to any one of Claims 1 to 5, wherein the sample is reflective or is placed on a reflective holder, such that the exposure light wave is a light wave reflected by the sample or by the reflective holder.

**8.** Method according to any one of the preceding claims, wherein the sample has a structured surface, and wherein the characterization of the sample is a characterization of the structure of the surface of the sample.

**9.** Method according to any one of the preceding claims, wherein the sample contains particles, the characterization of the sample being a characterization of the particles of the sample.

**10.** Device (1) for characterizing a sample, comprising:

- a light source (11, 11');
- a sample holder (9), configured to receive a sample;
- an image sensor (20), associated with an optical system (16), so as to form an image of the sample, when it is placed on the sample holder, the optical system defining an object plane ($P_o$) and an image plane ($P_i$), the device being such that:

  • the image sensor (20) may be moved with respect to the image plane;
  • and/or the sample may be moved with respect to the object plane;

- a processing unit (22), configured to:

  • take into account a calibration image acquired by the image sensor, the image sensor being illuminated without any sample placed between the image sensor and the light source;
  • define noise affecting each acquired image, at various radial coordinates ($r$) of the detection plane ($P$), based on the calibration image;
  • implement steps c) and d) of a method according to any one of the preceding claims, based on the images acquired by the image sensor.

**11.** Device according to Claim 10, comprising:

- a first light source (11), configured to illuminate the sample, when it is held on the holder, such that the sample is placed between the light source and the image sensor;
- a second light source (1 1'), configured to illuminate the sample, when it is held on the holder, such that the sample or the sample holder reflects the light towards the image sensor.

**Fig. 1A**

**Fig. 1B**

**Fig. 1C**

**Fig. 1D**

**Fig. 1E**

100

110

$I_z$

120

$\dfrac{\partial I_0(r)}{\partial z}$

90

$I_b$

131

$I_\psi$

132

$I_\varphi$

140

130

**Fig. 2A**

$I_{\delta z}(\mathbf{r})$

$\dfrac{\partial I_0(\mathbf{r})}{\partial z}$

$I_0(\mathbf{r})$

$I_{-\delta z}(\mathbf{r})$

**Fig. 2B**

**Fig. 3A**

**Fig. 3B**

**Fig. 4A**

**Fig. 4B**

**Fig. 5A**

**Fig. 5B**

**Fig. 5C**

**Fig. 6A**

**Fig. 6B**

**Fig. 6C**

**Fig. 7A**

**Fig. 7B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050062957 A
- US 20150100278 A

**Littérature non-brevet citée dans la description**

- Computational phase imaging based on intensity transport. **WALLER L.A.** PhD thesis. Massachussets Institute of Technology, 2010
- **BOSTAN E.** Phase retrieval by using transport of intensity équation and differential interférence contrast microscopy. *ICIP,* 2014, 3939-3943
- **TEAGUE R.** Deterministic phase retrieval : a Green's function solution. *JOSA,* 1983, vol. 73 (11), 1434-1441